# EUROPEAN PATENT SPECIFICATION

(11) **EP 1 703 250 B1**
(45) Date of publication and mention of the grant of the patent: **23.07.2008**
(21) Application number: 06004873.3
(22) Date of filing: 09.03.2006
(51) Int. Cl.: G01B 11/16, B60R 21/01, B60R 19/48

(54) **Collision detection apparatus for vehicle**
Vorrichtung zur Erfassung eines Fahrzeugaufpralls
Dispositif de détection de collision pour véhicule

(30) Priority: 15.03.2005 JP 2005074114
(43) Date of publication of application: 20.09.2006
(73) Proprietor: Denso Corporation, Kariya-city, Aichi-pref. 448-8661 (JP); Hitachi Cable, Ltd., Tokyo 101-8971 (JP)
(72) Inventor: Takafuji, Tetsuya c/o Denso Corporation, Kariya-city Aichi-pref., 448-8661 (JP); Fujita, Koichi c/o Toyota Jidosha Kabushiki Kaisha, Toyota-city Aichi-pref., 471-8571 (JP); Kachu, Ryotaro c/o Toyota Jidosha Kabushiki Kaisha, Toyota-city Aichi-pref., 471-8571 (JP); Kobayashi, Yoji c/o Hitachi Cable, Ltd., Chiyoda-ku Tokyo 100-8166 (JP)
(74) Representative: Kuhnen & Wacker

(56) References cited:
- DE-A1- 4 445 999
- DE-A1- 19 537 383
- GB-A- 2 145 517
- US-A- 4 735 212
- US-A1- 2003 164 755

## Description

Recently, there has been an increase in the number of vehicles having occupant protection apparatus (an airbag, a seatbelt pretensioner) for protecting an occupant from a serious accident, for example, collision. An air bag apparatus inflates an airbag at the time of collision of a vehicle, thereby preventing the occupant from being hit against, for example, an instrument panel. Because accurate detection of the collision is essential in order to surely inflate the airbag at the time of the collision, various types of collision detection apparatus having, for example, an acceleration sensor or an optical fiber sensor have been developed. The acceleration sensor detects a collision based on a sudden drop in acceleration at the time of the collision, and the optical fiber sensor detects the collision based on a sudden drop in the amount of received light at the time of the collision.

For example, in a conventional collision detection apparatus disclosed in JP-AH7-190732, as shown in FIG. 8, an optical fiber 102 is installed along a front bumper 100 of a vehicle. The optical fiber 102 has one end portion provided with a light emitting element 104 and the other end portion provided with a light receiving element 106. When a front portion of the vehicle collides with an object, the optical fiber 102 corresponding to the collided portion is damaged so that light leaks out. The collision is detected based on a fact that the amount of light received by the light receiving element 106 is reduced with respect to the amount of light emitted by the light emitting element 104.

In the conventional optical-fiber-type collision detection apparatus, there is room for improvement that makes the light emitting element 104 and the light receiving element 106 more compact. In fact, the light emitting element 104 and the light receiving element 106 are disposed on one end and the other end of the optical fiber 102, respectively. Therefore, a wire and a connector (not shown) for the light emitting element 104 need to be arranged separately from those for the light receiving element 106, thereby increasing cost. Further, such a wiring layout restricts layouts of other devices and components.

DE 195 37 383 A1 discloses, particularly in its Figure 2, a collision detection apparatus for a vehicle comprising a light emitting element disposed on the side of a first end portion of an optical fiber for emitting light into said first end portion and a light receiving element disposed on the side of a second end portion of said optical fiber to receive light emitted by said light emitting element into said first end portion of the optical fiber. The optical fiber has a section extending along a predetermined portion of the vehicle to be protected and a second section of the optical fiber disposed along said predetermined portion of the vehicle fiber and extending parallel to the first section of the optical fiber. Both sections of the optical fiber are connected by a bend of the optical fiber connecting said first section and said second section.

Apparently, the bend of a section of the optical fiber over 180° serves as a light path reversing element for reversing the direction of light excited by the light emitting element into a light path along the said second section of one and the same optical fiber so that this light could reach the light receiving element.

It is an object of the present invention to make a collision detection apparatus for a vehicle as compact as possible without complicating its structure and without suffering from complications for shaping into components.

This object, in accordance with the present invention, is achieved by the features of claim 1.

Advantageous embodiments and improvements are subject-matter of claims 1 to 5.

Thus, the collision detection apparatus includes first and second optical fibers arranged side by side along a predetermined portion of the vehicle, a light emitting element disposed on a side of a first end portion of the first optical fiber to emit light into the first end portion of the first optical fiber, a reversing member for reversing direction of light exiting from a second end portion of the first optical fiber to introduce the exiting light into a second end portion of the second optical fiber, and a light receiving element disposed on a side of a first end portion of the second optical fiber to receive light emitted out of the first end portion of the second optical fiber.

The light emitting element and the light receiving element are disposed on the same side of the first and second optical fibers, i.e., together on a predetermined portion of the vehicle. Consequently, the number of the parts such as the wire and the connector is reduced about by half compared to the conventional collision detection apparatus.The width and length of the installation area for the collision detection apparatus can be reduced. Light travels in fixed directions inside the first optical fiber and the second optical fiber, respectively. Therefore, a light path switching member is unnecessary.

In one embodiment, the reversing member may be a reflection mirror, arranged approximately in a V-shape, between the second end portion of the first optical fiber and the second end portion of the second optical fiber. Alternatively, the reversing member may be a light conductive member disposed from the second end portion of the first optical fiber to the second end portion of the second optical fiber.

The above and other objectives, features and advantages of the present invention will become more apparent from the following detailed description made with reference to the accompanying drawings. In the drawings:
FIG. 1 is a general schematic view showing a vehicle collision detection apparatus, description of this apparatus being not part of the invention but being useful for a better understanding of the present invention;
FIG. 2 is a view showing an optical fiber cable of FIG. 1;
FIG. 3A and FIG. 3B are views for explaining operation of systems of the kind shown in Fig. 1 and 2;
FIG. 4A is an enlarged vertical cross-sectional view showing the optical fiber cable of FIG. 2, and FIG. 4B is an enlarged vertical cross-sectional view showing a deformation caused by collision;
FIG. 5 is a view corresponding to FIG. 2, according to a first embodiment of the invention;
FIG. 6 is a view corresponding to FIG. 2, according to a second embodiment of the invention;
FIG. 7A and FIG. 7B are views corresponding to FIG. 4A and FIG. 4B, according to a modification; and
FIG. 8 is a perspective view showing a prior art.

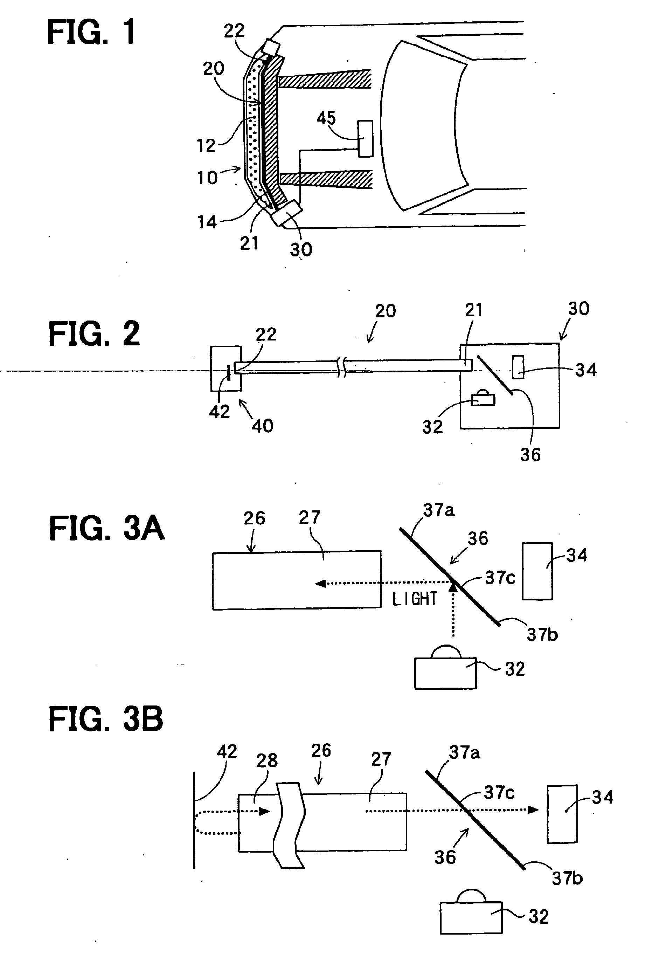

A collision detection apparatus of the general kind discussed herein will now be described with reference to FIGS. 1 to 4B.

As shown in FIG. 1, a bumper absorber 12 is disposed on a front edge side of a front portion 10 of a vehicle to extend in a width direction of the vehicle (top-bottom direction of FIG. 1). A bumper reinforcement 14 is disposed behind the bumper absorber 12.

An optical fiber cable 20 is installed in a space between the bumper absorber 12 and the bumper reinforcement 14 to extend in the width direction of the vehicle. Thus, the optical fiber cable 20 is installed along a predetermined portion, i.e., the front portion 10 of the vehicle. Alternatively, the predetermined portion may be a side portion or an edge portion (corner portion) that is easy to be damaged by collision. Although it is preferable that the optical fiber cable 20 be installed along the predetermined portion to be straightened, the optical fiber may be bent.

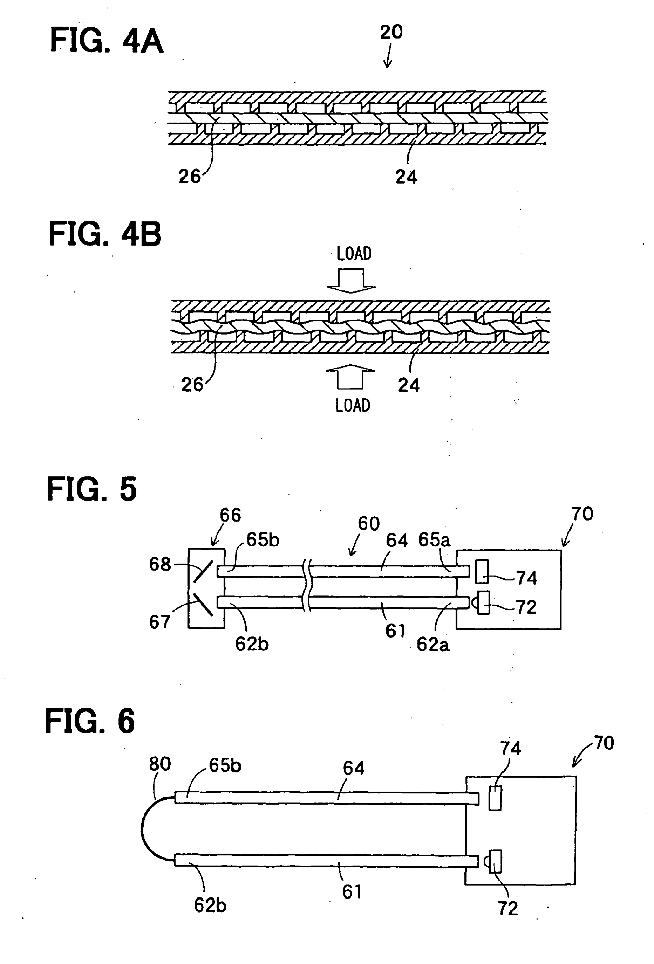

As shown in FIG. 4A, the optical fiber cable 20 includes a flexible cylindrical casing (bendable member) 24 having therein a hollow portion and an optical fiber 26 disposed in the hollow portion. For example, the optical fiber 26 may be made of glass fiber and have an optical fiber core and a clad (not shown).

In FIGS. 1 and 2, a circuit box 30 is disposed at one end portion 21 (bottom end of FIG. 1) of the optical fiber cable 20 and arranged on the front left side of the vehicle. As shown in FIGS. 2 to 3B, the circuit box 30 contains a light emitting element 32, a light receiving element 34, and a one-way mirror 36.

The light emitting element 32 may be, for example, a light emitting diode (LED) and emits intermittent (pulsed) light in a direction perpendicular to the length direction of the optical fiber 26. When a forward bias is applied, an electron and a positive hole cross a depletion zone so that light is emitted. Alternatively, a laser may be used as the light emitting element 32.

The light receiving element 34 may be, for example, a photodiode and receives light in a direction aligned with the length direction of the optical fiber 26. Photons absorbed by the photodiode excite electrons so that the electrons can move. Consequently, electron-hole pairs are generated. These carriers move inside the photodiode due to a bias voltage and flow through an external circuit as an electric current.

Thus, an axis of a light emitting direction of the light emitting element 32 is perpendicular to that of a light receiving direction of the light receiving element 34.

The one-way mirror 36 is disposed diagonally between the light emitting element 32 and the light receiving element 34. The one-way mirror 36 has one end portion 37a positioned near one end portion 21 of the optical fiber cable 20, i.e., one end portion 27 of the optical fiber 26, and the other end portion 37b extending between the light emitting element 32 and the light receiving element 34.

The one-way mirror 36 is constructed such that people on the brightly lit side see their own reflection on it and people on the dark side see through it. In FIG. 3A, therefore, the one-way mirror 36 reflects a large portion of light emitted by the light emitting element 32 in a direction parallel to the optical fiber 26. In FIG. 3B, the one-way mirror 36 passes light emitted out of the other end portion 27 into the light receiving element 34.

Thus, the one-way mirror 36 is disposed so as to prevent light from reaching the light receiving element 34 when the light emitting element 32 emits light and to prevent light from reaching the light emitting element 32 when the light receiving element 34 receives light.

The circuit box 30 further contains a drive circuit (not shown) for converting an electrical signal to an optical signal and an output circuit (not shown) for converting the optical signal to the electrical signal and amplifying the electrical signal as needed. A light emitting device is constructed with the light emitting element 32 and the drive circuit, and a light receiving device is constructed with the light receiving element 34 and the output circuit. The circuit box 30 is connected to a collision determination device 45.

Retuning to FIG. 1, a reflection box 40 is disposed at the other end portion (top end portion of FIG. 1) 22 of the optical fiber cable 20 and arranged on the front right side of the vehicle. The reflection box 40 contains a flat reflection mirror 42 arranged parallel to an end face of the other end portion 28 of the optical fiber 26.

Operations of the collision detection apparatus of the vehicle will now be described. In FIG. 3A, the light emitting element 32 emits light intermittently (in a pulsed way). A large portion of the emitted light is reflected by a surface of a middle portion 37c of the one-way mirror 36, enters the one end portion 27 of the optical fiber 26, and travels inside the optical fiber 26 to the other end portion 28. In FIG. 3B, the reflection mirror 42 arranged in the reflection box 40 reflects light exiting from the other end portion 28 of the optical fiber 26, and consequently direction of travel of the light is reversed by 180 degrees. During a period of time between previous and next light emissions, i.e., during a period of time when the light emitting element 32 emits no light, light travels inside the optical fiber 26 from the other end portion 28 to the one end portion 27. Thus, light travels inside the optical fiber 26 from the one end portion 27 to the other end portion 28 at a moment and from the other end portion 28 to the one end portion 27 at another moment. Both are repeated alternately. A large portion of light emitted out of the one end portion 27 passes through the middle portion 37c of the one-way mirror 36 and reaches the light receiving element 34.

Here, for example, it is assumed that the vehicle collides with an obstacle when light travels inside the optical fiber 26 from the one end portion 27 to the other end portion 28. In this case, as shown in FIG. 4B, the casing 24 of the optical fiber cable 20 is pressed, bent, or deformed by a diametral load applied to the casing 24. Accordingly, the optical fiber 26 is deformed and damaged so that some light leaks out. As a result of the leakage of light, the amount of light received by the light receiving element 34 is reduced with respect to the amount of light emitted by the light emitting element 32. The collision determination device 45 determines whether collision occurs based on the reduction, and an airbag is inflated

In the collision detection apparatus of the kind described above, the light emitting element 32 and the light receiving element 34 are arranged in the circuit box 30 that is disposed on the one end portion 21 of the optical fiber cable 20. Thus, structure of the circuit box 30 and the periphery thereof is simplified so that the width and length of the front portion 10 can be reduced.

The light emitting device 32 emits intermittent (pulsed) light into the one end portion 27 of the optical fiber 26, and the reflection mirror 42 reflects light exiting from the other end portion 28 of the optical fiber 26. Thus, the reflection mirror 42 acts as a reversing member for reversing direction of travel of light. The one-way mirror 36 reflects light emitted by the light emitting device 32 and passes light emitted out of the one end portion 27 of the optical fiber 26 into the light receiving element 34. Thus, the one-way mirror 36 acts as a light path switching member for changing a light path between when the light emitting element 32 emits light and when the light emitting element 32 emits no light. Therefore, the collision detection apparatus needs only the single optical fiber 26, i.e., the single optical fiber cable 20 so that manufacturing cost and installation area can be reduced.

A first embodiment of the invention will now be described with reference to FIG. 5. In this embodiment, an optical fiber cable 60 has a first optical fiber 61 and a second optical fiber 64 arranged side by side (e.g., in parallel to each other). A circuit box 70 is disposed on a side of one end portion 62a of the first optical fiber 61 and a side of one end portion 65a of the second optical fiber 64. The circuit box 70 contains a light emitting element 72 arranged close to the one end portion 62a of the first optical fiber 61 and a light receiving element 74 arranged close to the one end portion 65a of the second optical fiber 61. A reflection box 66 is disposed on a side of the other end portion 62b of the first optical fiber 61 and a side of the other end portion 65b of the second optical fiber 64. The reflection box 66 contains a pair of reflection mirrors 67, 68 arranged together in a V-shape. The reflection mirror 67 faces the other end portion 62b of the first optical fiber 61, and the reflection mirror 68 faces the other end portion 65b of the second optical fiber 64.

The light emitting element 72 emits continuous or intermittent light into the one end portion 62a of the first optical fiber 61. The emitted light travels inside the first optical fiber 61 from the one end portion 62a to the other end portion 62b, and then is reflected by the reflection mirrors 67, 68. Thus, the reflection mirrors 67, 68 act as the reversing member for reversing direction of travel of light. The reflected light travels inside the second optical fiber 64 from the other end portion 65b to the one end portion 65a, and then exits from the one end portion 65a. The exiting light enters the light receiving element 74.

In this embodiment, the light emitting element 72 and the light receiving element 74 are disposed on one side of the optical fiber 60 so that the advantage of this structure can be obtained. Further, there are installed the first optical fiber 61 for allowing light to travel from the one end portion 62a to the other end portion 62b and the second optical fiber 62 for allowing light from the other end portion 65b to the one end portion 65a. Therefore, the one-way mirror 36 of the above discussed structures is unnecessary. Accordingly, the number of parts can be reduced and installation area for the one-way mirror 36 can be eliminated.

A second embodiment will now be described with reference to FIG. 6. In the second modification, a light conductive cable 80 connects the other end portion 62b of the first optical fiber 61 and the other end portion 65b of the second optical fiber 64, instead of the reflection mirrors 67, 68. Thus, light conductive cable 80 acts as the reversing member for reversing direction of travel of light. The light conductive cable 80 may be, for example, made of glass or plastic and bent in a, half circle shape.

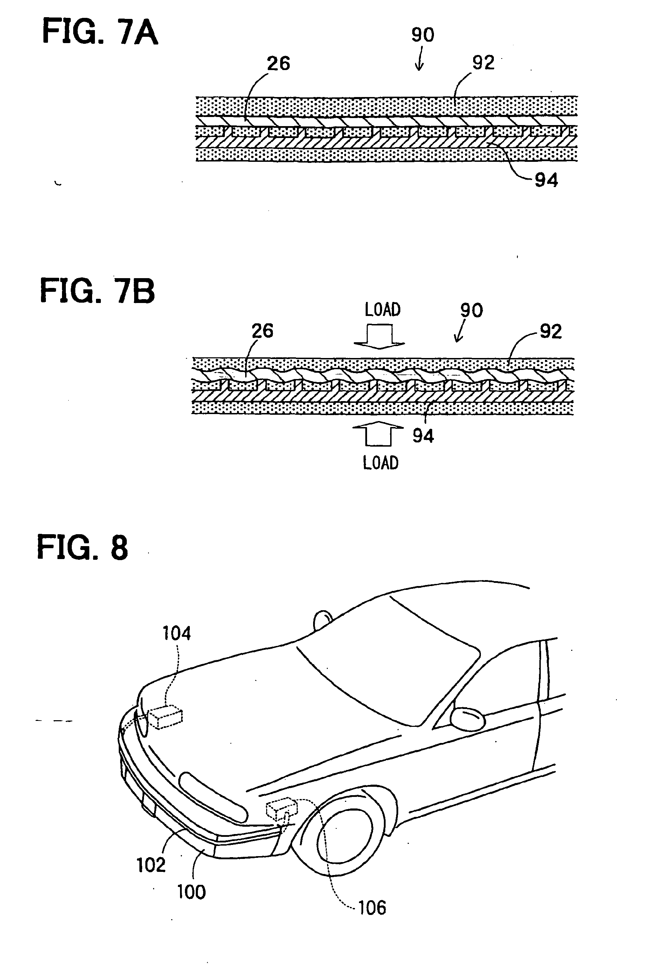

A modification will now be described with reference to FIGS. 7A and 7B. In this structure, an optical fiber cable 90 includes the optical fiber 26, a rubber member 92 having a rectangular shape in cross-section or a hollow cylindrical shape, and a bendable member 94. As shown in FIG. 7B, the optical fiber cable 90 is, for example, pressed and bent at the time of collision of the vehicle. In this case, load of the collision is applied to the optical fiber 26 after being distributed by the rubber member 92. Therefore, the optical fiber 26 of the optical fiber cable 90 is prevented from being damaged compared to that of the optical fiber cable 20 described above in the beginning.

Thus, the collision detection apparatus according to the present invention can detect a collision. For example, the collision detection apparatus detects a collision with a pedestrian, thereby driving a pedestrian protection system such as an over-the-hood air bag system, or an active hood system when the collision occurs.

Such changes and modifications are to be understood as being within the scope of the present invention as defined by the append portioned claims

## Claims

1. A collision detection apparatus for a vehicle, comprising:
a first optical fiber (61) disposed along a predetermined portion (10) of the vehicle;
a second optical fiber (64) disposed along the predetermined portion of the vehicle, the first optical fiber (61) and the second optical fiber (64) being arranged in parallel;
a light emitting element (72) disposed on a side of a first end portion (62a) of the first optical fiber (61) to emit light into the first end portion (62a) of the first optical fiber (61)
a reversing member (57, 68, 80) for reversing a direction of light exiting from a second end portion (62b) of the first optical fiber (61) and introducing the exiting light into a second end portion (65b) of the second optical fiber (64); and
a light receiving element (74) disposed on a side of a first end portion (65a) of the second optical fiber (64) to receive light emitted out of the first end portion (65a) of the second optical fiber (64).

2. The collision detection apparatus according to claim 1, wherein the reserving member (67, 68, 80) is a reflection mirror (67, 68), arranged approximately in a V-shape, between the second end portion (62b) of the first optical fiber (61) and the second end portion (65b) of the second optical fiber (64).

3. The collision detection apparatus according to claim 1, wherein the reversing member (67, 68, 80) is a light conductive member (80) disposed from the second end portion (62b) of the first optical fiber (61) to the second end portion (65b) of the second optical fiber (64).

4. The collision detection apparatus according to claim 1, wherein the light emitting element (72) emits light in a light emitting direction parallel to a length direction of the first optical fiber (61), and the light receiving element (74) receives light in a light receiving direction that is parallel to the length direction of the second optical fiber (64)

5. The collision detection apparatus according to any one of claims 1 to 4, wherein
the light emitting element (72) emits intermittent light.

## Patentansprüche

1. Kollisionserfassungsvorrichtung für ein Fahrzeug, aufweisend:
eine erste optische Faser (61), die entlang einem vorbestimmten Bereich (10) des Fahrzeugs angeordnet ist;
eine zweite optische Faser (64), die entlang dem vorbestimmten Bereich des Fahrzeugs angeordnet ist, wobei die erste optische Faser (61) und die zweite optische Faser (64) parallel angeordnet sind;
ein lichtemittierendes Element (72), das auf einer Seite eines ersten Endbereichs (62a) der ersten optischen Faser (61) angeordnet ist, um ein Licht in den ersten Endbereich (62a) der ersten optischen Faser (61) zu emittieren.
ein Umkehrbauteil (57, 68, 80) zum Umkehren einer Richtung eines Lichts, das aus einem zweiten Endbereich (62b) der ersten optischen Faser (61) austritt, und zum Einrühren des austretenden Lichts in einen zweiten Endbereich (65b) der zweiten optischen Faser (64); und
ein lichtaufnehmendes Element (74), das auf einer Seite eines ersten Endbereichs (65a) der zweiten optischen Faser (64) angeordnet ist, um ein aus dem ersten Endbereich (65a) der zweiten optischen Faser (64) emittiertes Licht aufzunehmen.

2. Kollisionserfassungsvorrichtung nach Anspruch 1, wobei das Umkehrbauteil (67, 68, 80) ein Reflexionsspiegel (67, 68), der näherungsweise in einer V-Form angeordnet ist, zwischen dem zweiten Endbereich (62b) der ersten optischen Faser (61) und dem zweiten Endbereich (65b) der zweiten optischen Faser (64) ist.

3. Kollisionserfassungsvorrichtung nach Anspruch 1, wobei das Umkehrbauteil (67, 68, 80) ein lichtleitendes Element (80) ist, das von dem zweiten Endbereich (62b) der ersten optischen Faser (61) zum zweiten Endbereich (65b) der zweiten optischen Faser (64) angeordnet ist.

4. Kollisionserfassungsvorrichtung nach Anspruch 1, wobei das lichtemittierende Element (72) ein Licht in einer lichtemittierenden Richtung parallel zu einer Längenrichtung der ersten optischen Faser (61) emittiert, und das lichtaufnehmende Element (74) ein Licht in einer lichtaufnehmenden Richtung aufnimmt, die parallel zu der Längenrichtung der zweiten optischen Faser (64) ist.

5. Kollisionserfassungsvorrichtung nach einem der Ansprüche 1 bis 4, wobei
das lichtemittierende Element (72) ein intermittierendes Licht emittiert.

## Revendications

1. Dispositif de détection de collision pour véhicule, comprenant:
une première fibre optique (61) disposée le long d'une partie prédéterminée (10) du véhicule ;
une deuxième fibre optique (64) disposée le long de la partie prédéterminée du véhicule, la première fibre optique (61) et la deuxième fibre optique (64) étant agencées en parallèle ;
un élément d'émission lumineuse (72) disposé sur un côté d'une première partie d'extrémité (62a) de la première fibre optique (61) pour émettre de la lumière dans la première partie d'extrémité (62a) de la première fibre optique (61) ;
un élément d'inversion (67, 68, 80) destiné à inverser une direction de sortie de lumière depuis une deuxième partie d'extrémité (62b) de la première fibre optique (61) et à introduire la lumière sortant dans une deuxième partie d'extrémité (65b) de la deuxième fibre optique (64) ; et
un élément de réception lumineuse (74) disposé sur un côté d'une première partie d'extrémité (65a) de la deuxième fibre optique (64) pour recevoir de la lumière émise depuis la première partie d'extrémité (65a) de la deuxième fibre optique (64).

2. Dispositif de détection de collision selon la revendication 1, dans lequel l'élément d'inversion (67, 68, 80) est un miroir réfléchissant (67, 68), agencé approximativement en une forme de V, entre la deuxième partie d'extrémité (62b) de la première fibre optique (61) et la deuxième partie d'extrémité (65b) de la deuxième fibre optique (64).

3. Dispositif de détection de collision selon la revendication 1, dans lequel l'élément d'inversion (67, 68, 80) est un élément conducteur de lumière (80) disposé depuis la deuxième partie d'extrémité (62b) de la première fibre optique (61) jusqu'à la deuxième partie d'extrémité (65b) de la deuxième fibre optique (64).

4. Dispositif de détection de collision selon la revendication 1, dans lequel l'élément d'émission lumineuse (72) émet de la lumière dans une direction d'émission lumineuse parallèle à la direction de la longueur de la première fibre optique (61), et l'élément de réception lumineuse (74) reçoit de la lumière dans une direction de réception de lumière qui est parallèle à la direction de la longueur de la deuxième fibre optique (64).

5. Dispositif de détection de collision selon l'une quelconque des revendications 1 à 4, dans lequel
l'élément d'émission lumineuse (72) émet une lumière intermittente.
